# EUROPEAN PATENT SPECIFICATION

(11) **EP 1 503 266 B1**
(45) Date of publication and mention of the grant of the patent: **06.06.2012**
(21) Application number: 04015494.0
(22) Date of filing: 01.07.2004
(51) Int. Cl.: G06F 21/24

(54) **Zone based security administration for data items**
Zonenbasierte Sicherheitsverwaltung für Datenelemente
Administration de sécurité pour données sur la base de zones

(30) Priority: 30.07.2003 US 630162
(43) Date of publication of application: 02.02.2005
(73) Proprietor: MICROSOFT CORPORATION, Redmond, Washington 98052 (US)
(72) Inventor: Hudis, Irena, Bellevue, Washington 98007 (US); Novik, Lev, Bellevue, Washington 98006 (US); Anand, Sanjay, Sammamish, Washington 98074 (US); Agarwal, Sameet H., Redmond, Washington 98052 (US); Raman, Balan Sethu, Redmond, Washington 98052 (US)
(74) Representative: Grünecker, Kinkeldey, Stockmair & Schwanhäusser

(56) References cited:
- WO-A-00/79434
- US-A1- 2003 061 216

## Description

### The Field of the Invention

The invention generally relates to the field of data security. More specifically the invention relates to security administration for groups of data items Background and Relevant Art

When handling information it is often desirable to limit access to specific portions of the information such that the specific portions are only accessible to certain authorized users. When information is contained in physical documents (e.g., printed book or ledgers), those documents can be secured using physical access controls such as locks and document custodians. However, in today's world, large amounts of information are stored in the form of digital data. Digital data is easily created, modified, copied, transported and deleted, which has resulted in the proliferation of vast amounts of digital data existing in a myriad of locations. Similar to physical documents, it is often desirable to limit access to portions of digital data. However, the sheer amount of digital data and ease of creating, copying, transporting, modifying, and deleting digital data make securing digital data challenging.

Two common types of digital data storage that exist are file structures and databases. A file structure is a hierarchal system of data storage wherein files containing digital data are stored in folders. Folders may be further stored in other folders. The digital data in the file is accessed in a per item manner. In other words, when the file is accessed it is often known what is in the file and accessing the file is done to specifically review or manipulate the digital data in the file.

Databases, on the other hand, generally store digital data in physical tables. The physical tables are generally organized according to some logical grouping. For example, a physical table in the database may contain a digital address book. The table containing the digital address book may further have columns specifying categories of information within the table. For example, a digital address book can include columns for first name, last name, telephone number, address etc.

Due the differences in file systems and databases, approaches to implementing security within these two types digital data storage are also different. For example, within a file structure, an access control list (ACL) can be assigned to each file wherein the ACL is a data structure that indicates to a computer's operating system which permissions or access rights each user has to a given file. An ACL may specify that a particular user or group of users have certain privileges such as read, write or execute permissions. Within the file structure, an ACL can be assigned to a folder such that any folders or files existing within the folder potentially default to the same security permissions as those assigned set forth in the ACL. However, an administrator can alter default security permissions based on access requirements for a particular file. Thus, in response to each request to manipulate a file, the ACL for the file must be accessed to determine the permissions assigned to the file.

One drawback of using ACLs with files is that increased overhead is added when performing operations such as file searches. For example, if a user constructs a search specifying a certain type of file or file containing certain data, the search must first check an ACL for each file to determine the security permissions the user has to the file before including the file in the domain of the search. For example, it may be inappropriate to reveal the existence of a file that the user can not even access. Since default permissions for files within a folder can be changed, ACLs for each file must be checked even when a folder level ACL potentially causes a number of files to default to the same security permissions.

In contrast, the security in data base systems is done by assigning ACLs to entire columns. Assigning ACLs to entire columns allows searches to be performed more efficiently because a single ACL can be accessed to determine security permissions for an entire column of data. A database can be configured such that searches can only be performed on a column when a user has the appropriate security permissions to access the column. Thus, there is no need to check permissions for each element within the table. One drawback of column based assignment of security permissions is that the granularity may be too coarse for some applications. For example while most of the digital data in a column representing a digital address book entry may be suitable for general access, it may be desirable to restrict access to some of the digital data such as Social Security numbers or other types of sensitive information. However, when an ACL is assigned to an entire column, security permissions cannot vary between different items in the column. Thus, there may be no way to limit access to a Social Security number without also similarly limiting access to address and telephone number.

Accordingly, a security system that allows ACLs to be assigned with configurable granularities would be beneficial.

WO 00/79434 discloses an access filter to control access by users at clients in a network to information resources provided by servers in the network. The document teaches using a policy server that present the access control system as a virtual relational database table in which there is a role for every user-information source combination. According to the document determination as to whether a user has access to an information source is implemented by a query indicating the user and the information source to the table. The result indicates at least whether the user has access.

The document also teaches a method in a computer system comprising storage means for storing items in an hierarchical format, wherein the volume being divided into at least one non-overlapping zone, each item residing in a zone from among the at least one non-overlapping zone, each zone having one or more principals with administrative rights, the method of delegating administrative rights to other principals for first items included in a main zone included in the at least one non-overlapping zone, comprising: an act of identifying the first items in the main zone;
an act of splitting the main zone into a first zone and a remaining main zone, the one or more main principals retaining administrative rights for the first zone and the remaining main zone, the first zone including the first items and the remaining main zone induing that portion of items in the main zone not included in the first items and an act of specifying that one or more first principals also have administrative rights to the first items.

One aspect of the present invention is a method as defined in independent claim 1. Another aspect of the invention is a computer program product as defined in independent claim 10. Further embodiments of the invention are specified in the respective appended dependent claims.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an example network architecture including a system that can administer security in accordance with principles of the present invention;
Figures 2 illustrates an example hierarchical volume for storing items and defining rules in accordance with principles of the present invention;
Figures 3 illustrates an example hierarchical volume divided into security zones in accordance with principles of the present invention;
Figure 4 illustrates an example method for delegating rights using aspects of some embodiments of the present invention;
Figure 5 illustrates an example method determining security rights, and
Figure 6 illustrates a suitable operating environment for the principles of the present invention.

### DETAILED DESCRIPTION OF THE PREFERRED EMBODIMENTS

The present invention extends to methods, systems, and computer program product for zone based security administration for data items. In one embodiment, a computer system determines security rights to at least a portion of a data item included in a security zone. That portion of a data item is specified through an element path such that security rules need not be applied at a cell level. In another embodiment of the invention, computer system delegates administrative rights, (i.e. the ability to change the security of to at least a portion of a data item) to principals. Each item resides in a zone from among the at least one-non overlapping zone. By each item being in a zone, administrative rights can be delegated at an appropriate granularity that is finer than an entire database table but yet coarse enough so as to not require delegation for each item.

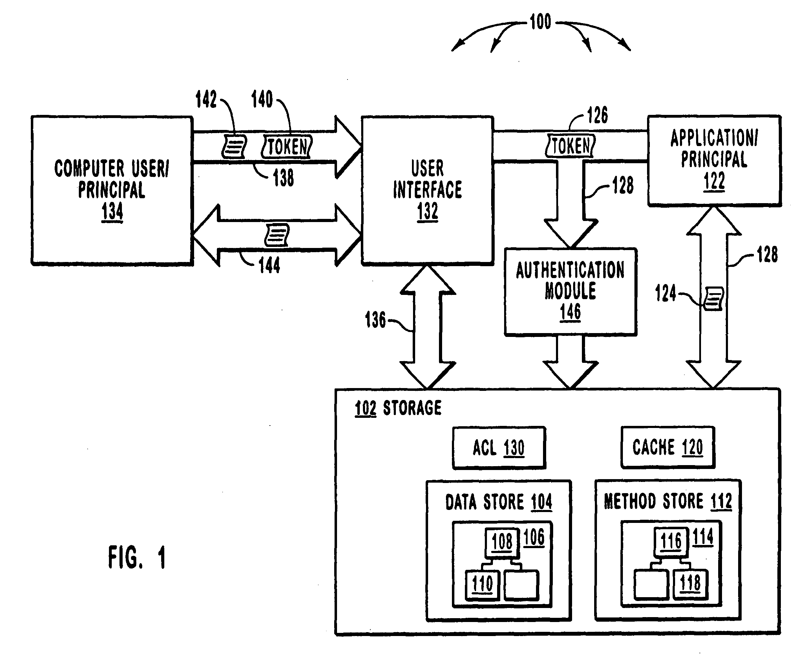

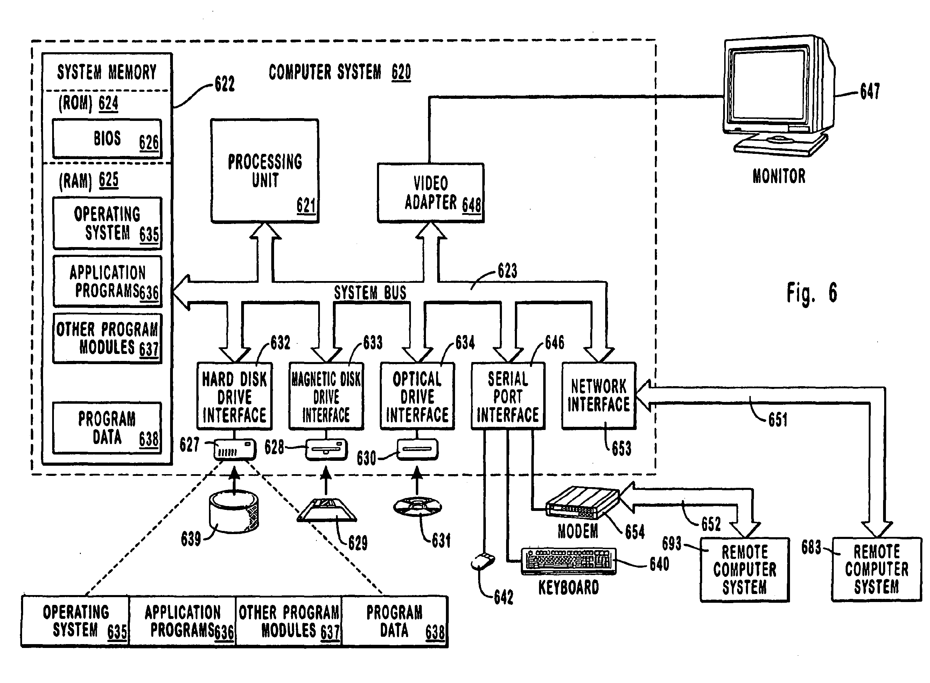

Referring now to Figure 1 an exemplary environment where aspects of the present invention may be practiced shown. Figure 1 shows a network architecture 100. The network architecture 100 comprises storage 102 that can store various data items and/or computer executable instructions (e.g., methods). Storage 102 may be implemented in a number of different storage media including but not limited to those set forth below in the description of Figure 6. Storage 102 comprises a data store 104 that can store data item in a hierarchical format. For example, item 106 may comprise one or more elements 108. Data elements may be further subdivided into attributes 110 that depend from the data elements 108. In the hierarchical format, a data item may be an element or attribute to a higher level data item.

Storage 102 further comprises a method store 112 that can store methods arranged in a hierarchical format. A method item 114 comprises elements 116 that may be methods. The elements may further comprise lower level methods (e.g., method 118). Lower level method 118 may itself be a method that has available at its disposal other sub-methods. While method store 112 and data store 104 are shown as separate stores, it may be that method store 112 and data store 104 are arranged together in the same hierarchy. Thus, a data item may have methods that depend from the data item, or a method may have data item attributes that depend from the method.

The network architecture 100 comprises, in one embodiment of the invention, an application 122 which is computer executable code for performing various functions. The application 122 is connected to the storage 102 through a communications channel 128. Communications channel 128 is shown with a scroll 127 where scroll 124 represents data items, data elements, data attributes, method items, and methods that may be passed between the application 122 and the storage 102. Another communications channel 126 exists for transferring tokens such as token 128 from the application to an authentication module 146.

A token 128 specifies information that allows the authentication module 146 to determine the identity of the principal presenting the token. For example in the present example, token 128 contains information that identifies a principal, namely application 122. The process of verifying the identity of a principal is often referred to as authenticating. The authentication module 148 may have access to a database of authentication information to compare with the token. In one embodiment of the invention, this authentication database is stored in the storage 102. Once the principal has been authenticated, rights can be determined for the principal by examining the rights specified for that principal by consulting an access control list (ACL).

The storage 102 further comprises one or more ACLs 130 that are used to determine what rights a principal has to items in the storage 102. Typically, an ACL has three arguments including a principal argument, a rights argument, and an item argument. These three arguments together specify what principals have what rights to what items. Using the authenticated token 128, it can be determined that an application 122 has rights to access items in the data store 104 or to execute methods in the method store 112. Although in the present example, a single ACL is shown, it should be understood that in embodiments of the invention, the ACL represents a number of security rules, each security rule granting to principals rights to items.

In one embodiment the invention, four rights that can be granted are read, write, delete and execute. Read, write and delete rights, when granted, allow a principal to review, manipulate and delete data items respectively such as data item 106 or elements such as elements 108 or attributes such as attributes 110. Execute rights, when granted, allow a principal such as application 122 to invoke methods such as method 118.

Network architecture 100 may further comprise a user interface 132. User interface 132 allows a computer user 134 to interact with the network architecture 100. The user interface 132 is connected to the storage 102 through a communications path 136. Another communications path shown in network architecture 100 is path 138 which is used to transfer tokens 140 and queries or requests 142 from the computer user 134 to the user interface 132. Yet another communications path that exists is communications path 144 through which data items, elements and attributes can be transferred between the computer user 134 and the user interface 132. The user interface 132 through communications path 136 facilitates the transfer of data items, elements and attributes to and from the storage 102.

In one embodiment of the invention, for computer user 134 to gain access to data items in data store 104 or to execute methods in method store 112, computer user 134 must be authorized to gain access to data items or to execute methods. To facilitate this, a token 140 is sent by computer user 134 to user interface 132 through communications path 138. User interface 132 directs token 140 through communications path 126 to authentication module 144. Authentication module 144 then verifies identity of computer user 134. An ACL such as ACL 130 determines the rights that computer user 134 has to data items in data store 104 and methods in method store 112.

In one embodiment of the invention an ACL 130 can be created by an administrative principal that has administrative rights over the items in data store 104 and in method store 112. The administrative principal may be one of a plurality of principals that have administrative rights. In one embodiment invention, the plurality of principals that have administrative rights is the same for all items existing in a security zone as explained in more detail below.

While Figure 1 shows a network architecture 100, it should be understood that embodiments of the invention can be implemented in a number of different architectures, including in a distributed computing environment, a single computer system such as that shown and discussed in Figure 6, or in a variety of other suitable systems.

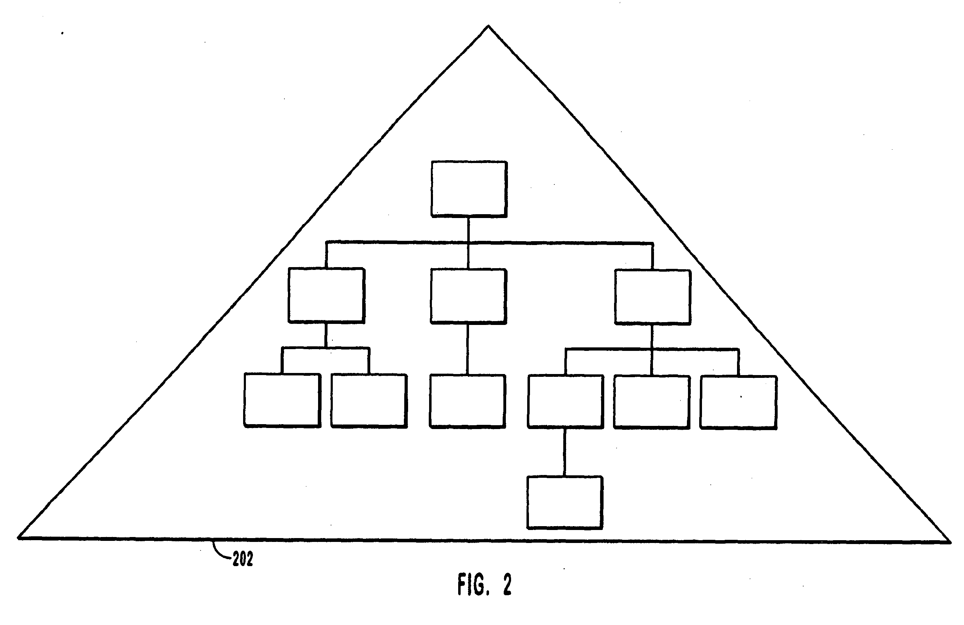

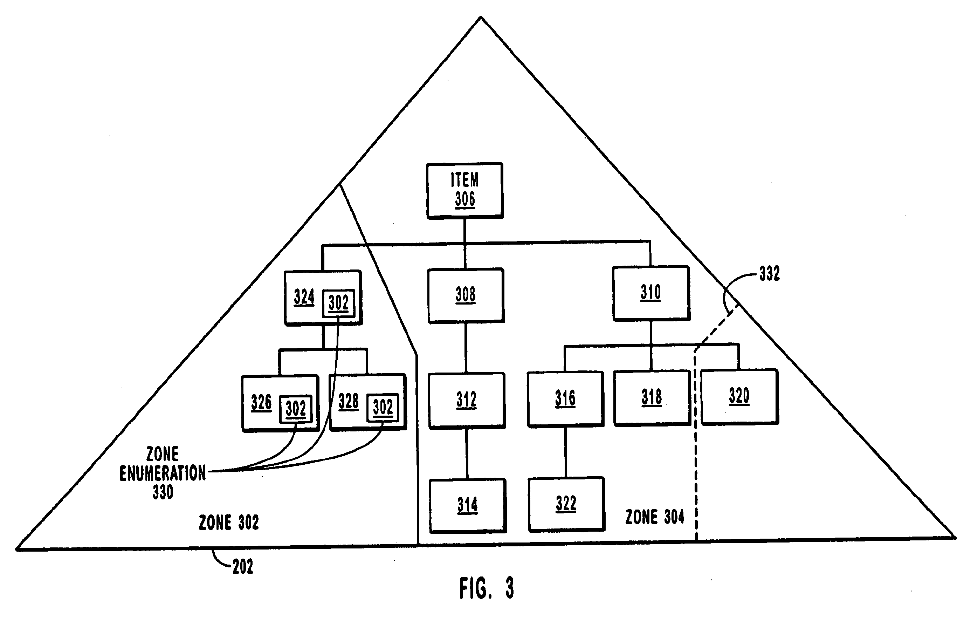

The concept of a security zone can be more fully understood by examining Figures 2 and 3. Figure 2 shows the hierarchical layout of items in storage such as storage 102. In the example shown in Figure 2 the items are shown in a volume 202. As noted above, volume 202 may exist at any suitable storage location such as those shown and discussed in Figure 6. Volume 202 includes all of the items in the storage 102. In one example, the entire volume 202 may comprise a single zone. Thus, one plurality of principals has administrative rights, i.e. the ability to change the security, for all items in zone/volume 202. In other embodiments of the invention, as shown in Figure 3, the volume is divided into a number of zones such as zone 302 and zone 304. Each of the zones may have a different plurality of principals with administrative rights. Thus, by splitting volume 202 into zones 302 and 304, administrative rights can be delegated to other principals.

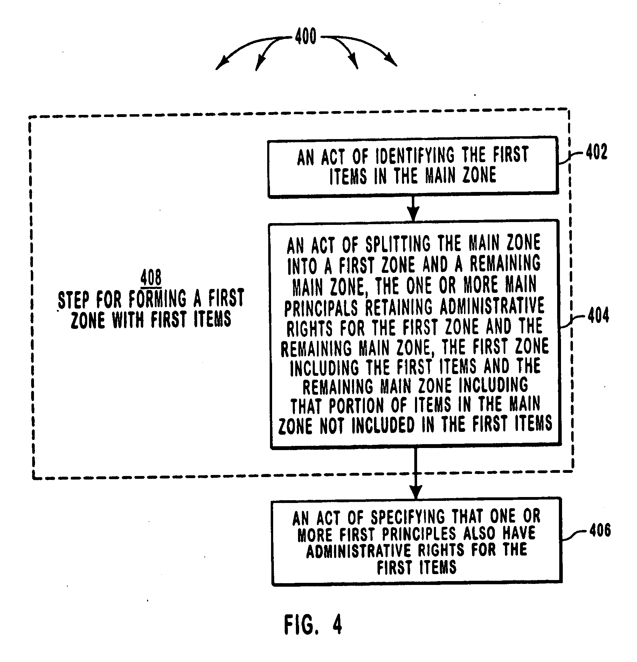

Referring now to Figure 4, a method for delegating rights to other principals is shown in method 400. Method 400, in one embodiment of the invention, is practiced in a computer system, such as network architecture 100 of Figure 1, where items, such as data items 106 and method items 114, are stored in a volume such as volume 202 shown in Figure 2. The volume is divided into at least one non-overlapping zone such as zones 302 and 304. The method 400 further contemplates that each item resides in a zone from among the at least one non-overlapping zone. Each of the zones has one or more administrative principals. The administrative principals administer security and auditing for the particular zone to which they belong. The method 400 is framed in the context of delegating administrative rights to other principals for first items included in a zone included in the at least one non-overlapping zone.

The method 400 includes a functional result oriented step for forming a first zone (step 408). Step 408 can include any corresponding acts for forming a first zone. However, in the example method in Figure 4, step 408 includes a corresponding act of identifying the first items in the main zone (act 402). Act 402 can include a computer system identifying the first items in the main zone. For example, a computer system in network architecture 100 can identify items from volume 202. Identified first items can be items that one or more of the administrative principals of the zone wish to delegate administrative rights to.

Step 408 further includes a corresponding act of splitting the main zone into a first zone and a remaining main zone (act 404). Act 404 can include a computer system splitting the main zone into a first zone and a remaining main zone. For example, a computer system in network architecture 100 can split volume 202 into zones 302 and 304. While two zones are formed from act 404, the one or more main principals retain administrative rights to both the first zone and the remaining main zone.

Splitting a main zone locates the first items in the first zone while the remaining main zone includes that portion of items originally in the main zone, not included in the first items. An example of splitting is shown in Figure 3. For example, the main zone may be volume 202. Splitting causes zones 302 and 304 to be created. While the volume originally included items 306 through 328, splitting causes items 324 through 328 to be in one zone (i.e. the first zone) and items 306 through 322 to be in another zone (i.e. the remaining main zone). At this point, the administrative principals for zones 302 and 304 are the same.

Method 400 further includes an act of specifying that one or more first principals also have administrative rights for the first items (act 406). Act 406 can include a computer system specifying that one or more first principals also have administrative rights for the first items. For example, computer system in network architecture 100 can specify that one or more first principles have administrative rights to items in zone 302.

Act 406 can be accomplished by assigning administrative rights to one or more additional principals. Thus, the main principals and the one or more additional principals all have administrative rights in items of the zone. For example if zone 302 is the first zone, the one or more main principals and the one or more first principals all have administrative rights to items in zone 302. The administrative rights are security rights and auditing rights.

Method 400 may also be such that the one or more first principals are changeable by the one or more main principals. Namely, any of the main principals can add principals to the one or more first principals or remove principals from the one or more first principals.

Method 400 may also include labeling items in the first zone with a zone enumeration corresponding to the first zone. For example as shown in Figure 3 the items in zone 302 are labeled with a zone enumeration 330. The zone enumeration 330 is useful for tracking which items reside in which zone. When the main zone is split, the remaining main zone and the first zone are examined to make sure that the two zones do not have any overlapping items. It is not necessary to check other zones for overlapping items with the first zone and the remaining main zone so long as when zones are split, they are checked for non-overlap. The zone enumeration is also useful to make sure that there is no overlap when a new relationship is added between items. For example, if items are to be associated with other items, all associated items should be in the same zone. This may be accomplished by consulting the zone enumeration.

Security rules such as those stored in the ACL 130 shown in Figure 1 can be added to the first zone such as zone 302 after the first zone has been created. In one embodiment of the invention, the first zone automatically includes any security rules that were previously in the main zone.

Zones may also be recombined. A zone should be recombined either with the other zone created at the time the zone was created or a zone created at some time from the other zone created at the time the zone was created. One challenge arises when zones are recombined subsequent to the remaining main zone being split to form a second zone. For example in Figure 3, a split is made such shown by dividing line 332 to group item 320 into a second zone while items 308 through 318 and 322 are in a subsequent remaining main zone. Nonetheless, a new zone may be created by recombining the first zone and a subsequent remaining main zone. In this case the subsequent remaining main zone is the zone that has for its administrative principals the principals originally for the main zone. The recombined zone has as principals the principals originally in the main zone.

When zones are recombined, the security rules of both zones remain in place. Other security rules can also be defined in the newly created zone.

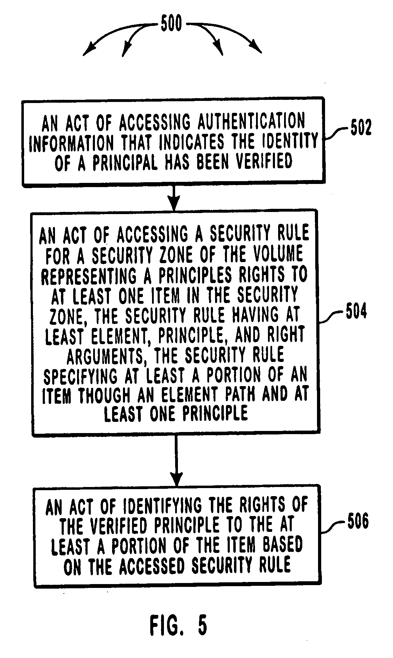

Referring now to Figure 5, a method of determining security rights. Method 500 may be practiced in a computer system such as network architecture 100 shown in Figure 1. The computer system comprises items such as data items 106 and method items 114. The items reside in a volume on the computer system such as volume 202 shown in Figure 2. The volume is divided into at least one security zone. Each item resides in a single security zone. One example of this is shown in Figure 3. Figure 3 shows two security zones, zone 302 and zone 304. None of the items in zone 302 (items 324-326) reside in zone 304. Further, none of the items in zone 304 (items 306-322) reside in zone 302.

Method 500 includes an act accessing authentication information that indicates the identity of a principal has been verified (act 502). Act 502 can include a computer system accessing authentication information that indicates the identity of a principal has been verified. For example, a computer system in network architecture 100 can access authentication information provided by authentication module 146 or authentication information stored in cache 120. In one embodiment, act 502 is performed by an authentication module 144 such as the authentication module shown in Figure 1.

The authentication module may receive a token such as token 128 or token 140 from a principal. The authentication module then compares the information in the token to information that the authentication module 144 has available to it to verify the identity of a principal. This information may be available in a database that contains authentication information. Several different types of tokens exists such as passwords, encrypted strings, physical keys such as smart cards, biometric keys such as fingerprints, voice analysis, etc. Two particular tokens that may be used are windows tokens and authenticated XrML license sets. Act 502 may be further performed by consulting a cache entry such as an entry in cache 120 shown in Figure 1. Specifically, in one embodiment, once a token has been authenticated by the authentication module 144, information can be placed into the cache 120 such that subsequent authenticating of a principal in the same session can now be done by consulting the entry in cache.

Method 500 includes an act of accessing a security rule (act 504). Act 504 can include a computer system accessing a security rule. For example, a computer system in network architecture 100 can access a security rules from ACL 130. The security rule exists for a security zone. The security rule may be embodied in one example of the invention as ACL 130 shown in Figure 1. The security rule may have three arguments, namely; element, principal and right arguments. The element argument specifies a least a portion of an item through an element path.

For example, if a security rule granted rights for item 312 in Figure 3, the element argument would specify the path to item 312 such as 306.308.312. This path includes a topmost item, item 306, an item that depends from item 306, item 308, and finally the item for which the security applies, item 312 which depends from item 308. In another embodiment, a security rule may specify an element that is a complex element that comprises a plurality of attributes. In this case access can be granted to all attributes of the element. For example if the element path is 306.310, than a principal would have rights to element 310 as well as all elements that depend from element 310 including elements 316 through 322.

Additionally, a security rule may specify that a principal only has access to certain types of elements. For example, a complex element is one that has several different attributes. One specific example of a complex element is an element of type name in a digital address book. An element of type name may include first name, last name and middle name attributes. If a user is granted rights to an item that includes type name elements as well as other elements, the user can be restricted to only the type name elements by specifying type name in the security rule.

The security rule may further include a deny access control entry (ACE) that excludes a least one element from the at least a portion of the data item. For example, the rule may specify that a principal has rights to item 310. As noted above, if only item 310 is specified, then the principal has rights to items 316, 318, 320, and 322. However, using a deny ACE, a rule may specify that a principal has rights to item 310 excluding item 320.

The security rule comprises a principal argument that specifies principals with security rights. In one embodiment, a principal is a computer user such as computer user 134 shown in Figure 1. In another embodiment a principal may be an application running on a computer system such as application 122 running on network architecture 100. The principal argument may specify a set of principals that may be granted rights. For example, the principal argument could include all network administrators. The security rule may also included a deny ACE where the deny ACE excludes at least one principal from the set of principals.

For example, a rule may specify a set of principals including all network administrators while excluding a particular administrator. If the particular network administrator excluded by the deny ACE is granted rights in a different security rule that are the same as in as those in a security rule from which the networks administrator was excluded, then the network administrator will have the specified security rights. For example, if one security rule specifies that all administrators except X have rights to item Y, and a second security rule specifies that administrator X has rights to item Y, then administrator X has rights to item Y. To remove administrator X's rights to item Y a deny ACE can be used to exclude administrator X in every rule granting rights to item Y. The security rule in one embodiment is a grant, meaning that rights can be granted. Rights cannot be taken away from the principal by creating a deny rule, but rather all of the grant rules must be modified or removed to disallow a principal from certain rights.

The security rule may also comprise a right argument. Various embodiments allow for rights including read, write, delete and execute rights. If a read right is granted to a principal for an item, the right is generally associated with a data item which a principal may view but may not change or delete. If a write right is granted to a principal for an item, the right is generally associated with a data item which a principal may generally view and edit but may not delete. If a delete right is granted to the principal for an item, the right is generally associated with a data item which a principal may view, edit and delete. If an execute right is granted to an item, the right is generally associated with a method item that the principal may cause to be executed.

Method 500 includes an act of identifying the rights of the verified principal to the at least a portion of the item based on the accessed security rule (act 506). Act 506 can include a computer system identifying the rights of the verified principal to the at least a portion of the item based on the accessed security rule. For example, a computer system in network architecture 100 can identify rights of the verified principal to item 324 based on a security rule accessed from ACL 130. In this way, in one embodiment of the invention, the network architecture 100 can determine what access a principal such as computer user 134 or application 122 has to an item stored in storage 102.

Method 500 may also grant the principal rights specified in the security rule if a principal is specified in the principal argument of the security rule.

The method 500 may also receive a query that includes a query element argument. If the principal sending the query has the appropriate rights to an element in the query element argument, method 500 returns the results of the query. For example, if a principal sends a query requesting all elements within a certain item that are "green" and the principal has rights to the item or all elements in the item, the elements that are green will be returned. If the principal does not have rights to all of the elements in the item, the query will return a "not found" even if the principal has rights to some of the elements in the item that are green. This is done so that efficient searching can still be performed by not requiring the security rules to be associated with each element. Thus, if a principal wants to send a query to find all the "green" elements, the principal may send a query for all elements except those that the principal does not have rights to. So for example, if a principal has rights to item 310 shown in Figure 3 except for element 320, the principal must request all elements that are green in item 310 except item 320.

Method 500 may also control rights for modifying the security rules themselves. In this case the security rules are included in the volume (such as volume 202 in Figures 2 and 3) as an item. The security for the security rules can then be set using another security rule.

In one embodiment, an API is provided that allows a user to query the effective security of an item. The API computes the security based on the set of security rules. The API may be executable program code such as that discussed in Figure 6 below.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

Figure 6 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 6, an exemplary system for implementing the invention includes a general purpose computing device in the form of a conventional computer 620, including a processing unit 621, a system memory 622, and a system bus 623 that couples various system components including the system memory 622 to the processing unit 621. The system bus 623 may be any of several types of bus structures including a memory bus or memory controller, a peripheral bus, and a local bus using any of a variety of bus architectures. The system memory includes read only memory (ROM) 624 and random access memory (RAM) 625. A basic input/output system (BIOS) 626, containing the basic routines that help transfer information between elements within the computer 20, such as during start-up, may be stored in ROM 624.

The computer 620 may also include a magnetic hard disk drive 627 for reading from and writing to a magnetic hard disk 639, a magnetic disk drive 628 for reading from or writing to a removable magnetic disk 629, and an optical disk drive 630 for reading from or writing to removable optical disk 631 such as a CD-ROM or other optical media. The magnetic hard disk drive 627, magnetic disk drive 628, and optical disk drive 630 are connected to the system bus 623 by a hard disk drive interface 632, a magnetic disk drive-interface 633, and an optical drive interface 634, respectively. The drives and their associated computer-readable media provide nonvolatile storage of computer-executable instructions, data structures, program modules and other data for the computer 620. Although the exemplary environment described herein employs a magnetic hard disk 639, a removable magnetic disk 629 and a removable optical disk 631, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 639, magnetic disk 629, optical disk 631, ROM 624 or RAM 625, including an operating system 635, one or more application programs 636, other program modules 637, and program data 638. A user may enter commands and information into the computer 620 through keyboard 640, pointing device 642, or other input devices (not shown), such as a microphone, joy stick, game pad, satellite dish, scanner, or the like. These and other input devices are often connected to the processing unit 621 through a serial port interface 646 coupled to system bus 623. Alternatively, the input devices may be connected by other interfaces, such as a parallel port, a game port or a universal serial bus (USB). A monitor 647 or another display device is also connected to system bus 623 via an interface, such as video adapter 648. In addition to the monitor, personal computers typically include other peripheral output devices (not shown), such as speakers and printers.

The computer 620 may operate in a networked environment using logical connections to one or more remote computers, such as remote computers 683 and 693. Remote computers 683 and 693 may each be another personal computer, a server, a router, a network PC, a peer device or other common network node, and typically include many or all of the elements described above relative to the computer 620. The logical connections depicted in Figure 6 include a local area network (LAN) 651 and a wide area network (WAN) 652 that are presented here by way of example and not limitation. Such networking environments are commonplace in office-wide or enterprise-wide computer networks, intranets and the Internet.

When used in a LAN networking environment, the computer 620 is connected to the local network 651 through a network interface or adapter 653. When used in a WAN networking environment, the computer 620 may include a modem 654, a wireless link, or other means for establishing communications over the wide area network 652, such as the Internet. The modem 654, which may be internal or external, is connected to the system bus 623 via the serial port interface 646. In a networked environment, program modules depicted relative to the computer 620, or portions thereof, may be stored in the remote memory storage device. It will be appreciated that the network connections shown are exemplary and other means of establishing communications over wide area network 652 may be used.

## Claims

1. A method in a computer system that includes items stored in at least one volume (202), the volume being divided into at least one non-overlapping zone (302, 304), each item residing in a zone from among the at least one non-overlapping zone, each zone having one or more principals with administrative rights, wherein the principals administer security and auditing for the particular zone to which they belong, the method of delegating administrative rights to other principals for first items included in a main zone included in the at least one non-overlapping zone, comprising:
an act of identifying (402) the first items in the main zone;
an act of splitting (404) the main zone into a first zone and a remaining main zone, the one or more main principals retaining administrative rights for the first zone and the remaining main zone, the first zone including the first items and the remaining main zone including that portion of items in the main zone not included in the first items; and
an act of labelling items in the first zone (302) with a zone enumeration corresponding to the first zone, the zone enumeration being useful for tracking which items reside in which zone, wherein when the main zone is split, the remaining main zone and the first zone are examined to make sure that the two zones do not have any overlapping items;
an act of specifying (406) that one or more first principals also have administrative rights to the first items.

2. The method of claim 1, specifying the one or more first principals is performed by the one or more main principals;

3. The method of claim 1 further comprising the act of labeling the first items with a zone enumeration corresponding to the first zone.

4. The method of claim 1, the administrative rights being security rights.

5. The method of claim 1, the administrative rights being auditing rights.

6. The method of claim 1 further comprising the act of specifying security rules for the first zone after the act of splitting.

7. The method of claim 1 comprising the act of specifying security rules for the first zone by defaulting security rules that were from the main zone prior to the act of splitting.

8. The method of claim 1, further comprising an act of re-combining the first zone and the remaining main zone.

9. The method of claim 1, wherein the administrative principals of the subsequent remaining main zone are the administrative principals in the main zone, comprising an act of re-combining the first zone and the remaining main zone.

10. A computer program product for use in a computer system that includes items stored in at least one volume (202), the volume being divided into at least one non-overlapping zone (302, 304), each item residing in a zone from among the at least one non-overlapping zone, each zone having one or more principals with administrative rights, the computer program product for implementing a method of delegating administrative rights to other principals for first items included in a main zone included in the at least one non-overlapping zone, the computer program product comprising one or more computer-readable media having stored thereon computer-executable instructions that, when executed by a processor, cause the computer system to perform the following:
identify (402) the first items in the main zone;
split (404) the main zone into a first zone and a remaining main zone, the one or more main principals retaining administrative rights for the first zone and the remaining main zone, the first zone including the first items and the remaining main zone including that portion of items in the main zone not included in the first items;
an act of labelling items in the first zone (302) with a zone enumeration corresponding to the first zone, the zone enumeration being useful for tracking which items reside in which zone, wherein when the main zone is split, the remaining main zone and the first zone are examined to make sure that the two zones do not have any overlapping items; and
specify (406) that one or more first principals also have administrative rights to the first items.

## Patentansprüche

1. Verfahren in einem Computersystem, das Objekte beinhaltet, die in wenigstens einem Datenspeicher (202) gespeichert sind, wobei der Datenspeicher in wenigstens eine nichtüberlappende Zone (302, 304) unterteilt ist, wobei sich jedes Objekt in einer Zone von der wenigstens einen nichtüberlappenden Zone befindet, wobei jede Zone einen oder mehrere Berechtigte bezüglich administrativer Rechte aufweist, wobei die Berechtigten die Sicherheit und die Prüfung für die bestimmte Zone, zu der sie gehören, verwalten, wobei das Verfahren zum Delegieren von administrativen Rechten an andere Berechtigte für erste Objekte, die in einer Hauptzone beinhaltet sind, die in der wenigstens einen nichtüberlappenden Zone beinhaltet ist, umfasst:
einen Vorgang des Identifizierens (402) der ersten Objekte in der Hauptzone;
einen Vorgang des Splittens (404) der Hauptzone in eine erste Zone und eine verbleibende Hauptzone, wobei der eine oder die mehreren Hauptberechtigten administrative Rechte für die erste Zone und die verbleibende Hauptzone behalten, wobei die erste Zone die ersten Objekte beinhaltet und die verbleibende Hauptzone denjenigen Teil von Objekten in der Hauptzone beinhaltet, der nicht in den ersten Objekten beinhaltet ist; und
einen Vorgang des Etikettierens von Objekten in der ersten Zone (302) mit einer Zonennummerierung entsprechend der ersten Zone, wobei die Zonennummerierung für ein Nachverfolgen dessen, welche Objekte sich in welcher Zone befinden, geeignet ist, wobei dann, wenn die Hauptzone gesplittet wird, die verbleibende Hauptzone und die erste Zone untersucht werden, um sicherzustellen, dass die beiden Zonen keine überlappenden Objekte aufweisen;
einen Vorgang des Spezifizierens (406), dass ein oder mehrere erste Berechtigte ebenfalls administrative Rechte an den ersten Objekten haben.

2. Verfahren nach Anspruch 1, wobei das Spezifizieren des einen oder der mehreren ersten Berechtigten von dem einen oder den mehreren Hauptberechtigten durchgeführt wird.

3. Verfahren nach Anspruch 1, des Weiteren umfassend einen Vorgang des Etikettierens der ersten Objekte mit einer Zonennummerierung entsprechend der ersten Zone.

4. Verfahren nach Anspruch 1, wobei die administrativen Rechte Sicherheitsrechte sind.

5. Verfahren nach Anspruch 1, wobei die administrativen Rechte Prüfrechte sind.

6. Verfahren nach Anspruch 1, des Weiteren umfassend einen Vorgang des Spezifizierens von Sicherheitsregeln für die erste Zone nach dem Vorgang des Splittens.

7. Verfahren nach Anspruch 1, umfassend einen Vorgang des Spezifizierens von Sicherheitsregeln für die erste Zone durch Nichteinhalten von Sicherheitsregeln, die aus der ersten Zone waren, vor dem Vorgang des Splittens.

8. Verfahren nach Anspruch 1, des Weiteren umfassend einen Vorgang des Wiederkombinierens der ersten Zone und der verbleibenden Hauptzone.

9. Verfahren nach Anspruch 1, wobei die Administrativberechtigten der nachfolgenden verbleibenden Hauptzone die Administrativberechtigten in der Hauptzone sind, umfassend einen Vorgang des Wiederkombinierens der ersten Zone und der verbleibenden Hauptzone.

10. Computerprogrammerzeugnis zur Verwendung in einem Computersystem, das Objekte beinhaltet, die in wenigstens einem Datenspeicher (202) gespeichert sind, wobei der Datenspeicher in wenigstens eine nichtüberlappende Zone (302, 304) unterteilt ist, wobei sich jedes Objekt in einer Zone von der wenigstens einen nichtüberlappenden Zone befindet, wobei jede Zone einen oder mehrere Berechtigte bezüglich administrativer Rechte aufweist, wobei das Computerprogrammerzeugnis dem Implementieren eines Verfahrens zum Delegieren von administrativen Rechten an andere Berechtigte für erste Objekte, die in einer Hauptzone beinhaltet sind, die in der wenigstens einen nichtüberlappenden Zone beinhaltet ist, dient, wobei das Computerprogrammerzeugnis ein oder mehrere computerlesbare Medien umfasst, auf denen computerausführbare Anweisungen gespeichert sind, die bei Ausführung durch einen Prozessor veranlassen, dass das Computersystem das Nachfolgende durchführt:
Identifizieren (402) der ersten Objekte in der Hauptzone;
Splitten (404) der Hauptzone in eine erste Zone und eine verbleibende Hauptzone, wobei der eine oder die mehreren Hauptberechtigten administrative Rechte für die erste Zone und die verbleibende Hauptzone behalten, wobei die erste Zone die ersten Objekte beinhaltet und die verbleibende Hauptzone denjenigen Teil von Objekten in der Hauptzone beinhaltet, der nicht in den ersten Objekten beinhaltet ist;
einen Vorgang des Etikettierens von Objekten in der ersten Zone (302) mit einer Zonennummerierung entsprechend der ersten Zone, wobei die Zonennummerierung für ein Nachverfolgen dessen, welche Objekte sich in welcher Zone befinden, geeignet ist, wobei dann, wenn die Hauptzone gesplittet wird, die verbleibende Hauptzone und die erste Zone untersucht werden, um sicherzustellen, dass die beiden Zonen keine überlappenden Objekte aufweisen; und
Spezifizieren (406), dass ein oder mehrere erste Berechtigte ebenfalls administrative Rechte an den ersten Objekten haben.

## Revendications

1. Procédé de système informatique qui comprend des articles stockés dans au moins un volume (202), le volume étant divisé en au moins une zone non chevauchante (302, 304), chaque article résidant dans une zone comprise dans la ou les zone(s) non chevauchante(s), chaque zone comprenant un ou plusieurs mandant(s) possédant des droits administratifs, les mandants gérant la sécurité et la vérification pour la zone spécifique à laquelle ils appartiennent, le procédé comprenant la délégation de droits administratifs à d'autres mandants pour des premiers articles compris dans une zone principale comprise dans la ou les zone(s) non chevauchante(s), comprenant :
une étape d'identification (402) des premiers articles dans la zone principale ;
une étape de division (404) de la zone principale en une première zone et une zone principale restante, le ou les mandant(s) principal/principaux conservant des droits administratifs pour la première zone et la zone principale restante, la première zone comprenant les premiers articles et la zone principale restante comprenant la partie d'articles de la zone principale qui n'est pas comprise dans les premiers articles ; et
une étape d'étiquetage d'articles de la première zone (302) à l'aide d'un dénombrement de zone correspondant à la première zone, le dénombrement de zone étant utile pour suivre dans quelle zone résident tels articles, dans lequel, lorsque la zone principale est divisée, la zone principale restante et la première zone sont examinées afin de s'assurer que les deux zones n'ont pas d'articles chevauchants ;
une étape de spécification (406) qu'un ou plusieurs premier(s) mandant(s) possède(nt) également des droits administratifs vis-à-vis des premiers articles.

2. Procédé conformément à la revendication 1 spécifiant que le ou les premier(s) mandant(s) est/sont mis en oeuvre par le ou les mandant(s) principal/principaux ;

3. Procédé conformément à la revendication 1, comprenant en outre l'étape d'étiquetage des premiers articles à l'aide d'un dénombrement de zone correspondant à la première zone.

4. Procédé conformément à la revendication 1, les droits administratifs étant des droits de sécurité.

5. Procédé conformément à la revendication 1, les droits administratifs étant des droits de vérification.

6. Procédé conformément à la revendication 1, comprenant en outre l'étape de spécification de règles de sécurité pour la première zone après l'étape de division.

7. Procédé conformément à la revendication 1, comprenant l'étape de spécification de règles de sécurité pour la première zone par la sélection par défaut de règles de sécurité qui provenaient de la zone principale avant l'étape de division.

8. Procédé conformément à la revendication 1, comprenant en outre une étape de recombinaison de la première zone et de la zone principale restante.

9. Procédé conformément à la revendication 1, dans lequel les mandants administratifs de la zone principale restante subséquente sont les mandants administratifs de la zone principale, comprenant une étape de recombinaison de la première zone et de la zone principale restante.

10. Produit-programme informatique à utiliser dans un système informatique qui comprend des articles stockés dans au moins un volume (202), le volume étant divisé en au moins une zone non chevauchante (302, 304), chaque article résidant dans une zone comprise dans la ou les zone(s) non chevauchante(s), chaque zone comprenant un ou plusieurs mandant(s) possédant des droits administratifs, le produit-programme informatique mettant en oeuvre un procédé de délégation de droits administratifs à d'autres mandants pour des premiers articles compris dans une zone principale comprise dans la ou les zone(s) non chevauchante(s), le produit-programme informatique comprenant un ou plusieurs support(s) lisible(s) par ordinateur sur le(s)quel(s) sont stockées des instructions exécutables par ordinateur, lesquelles, lorsqu'elles sont exécutées par un processeur, amènent le système informatique à exécuter les étapes suivantes comprenant :
l'identification (402) des premiers articles de la zone principale ;
la division (404) de la zone principale en une première zone et une zone principale restante, le ou les mandant(s) principal/principaux conservant des droits administratifs pour la première zone et la zone principale restante, la première zone comprenant les premiers articles et la zone principale restante comprenant la partie des articles de la zone principale qui n'est pas comprise dans les premiers articles ;
une étape d'étiquetage d'articles de la première zone (302) à l'aide d'un dénombrement de zone correspondant à la première zone, le dénombrement de zone étant utile pour suivre dans quelle zone résident tels articles, dans lequel lorsque la zone principale est divisée, la zone principale restante et la première zone sont examinées pour s'assurer que les deux zones n'ont pas d'articles chevauchants ; et
la spécification (406) qu'un ou plusieurs premier(s) mandant(s) possède(nt) également des droits administratifs vis-à-vis des premiers articles.
